# EUROPÄISCHE PATENTSCHRIFT

(11) **EP 2 367 610 B1**
(45) Veröffentlichungstag und Bekanntmachung des Hinweises auf die Patenterteilung: **13.02.2013**
(21) Anmeldenummer: 09774660.6
(22) Anmeldetag: 08.12.2009
(51) Int. Cl.: B01D 46/08

(54) **PLATTENFÖRMIGER ABSCHEIDER FÜR FLÜSSIGKEITEN AUS EINEM GASSTROM**
PLATE-SHAPED SEPARATOR FOR SEPARATING LIQUIDS FROM A GAS FLOW
SÉPARATEUR EN FORME DE PLAQUE SERVANT À EXTRAIRE DES LIQUIDES D'UN FLUX DE GAZ

(30) Priorität: 19.12.2008 DE 102008064042
(43) Veröffentlichungstag der Anmeldung: 28.09.2011
(73) Patentinhaber: RENTSCHLER REVEN-LÜFTUNGSSYSTEME GMBH, 74372 Sersheim (DE)
(72) Erfinder: MÜLLER, Axel, 79102 Freiburg (DE); RENTSCHLER, Sven, 74372 Sersheim (DE)
(74) Vertreter: Hoeger, Stellrecht & Partner Patentanwälte
(86) Internationale Anmeldenummer: PCT/EP2009/066590
(87) Internationale Veröffentlichungsnummer: WO 2010/069816

(56) Entgegenhaltungen:
- EP-A2- 0 281 981
- WO-A1-91/17813
- WO-A1-94/13387
- DE-A1- 10 042 443
- DE-C- 231 156
- DE-U- 7 524 852
- DE-U1- 8 700 012
- DE-U1- 9 013 468
- DE-U1-202005 001 143
- FR-A1- 2 240 036
- US-A- 3 910 782
- US-A- 5 302 174

## Beschreibung

Die Erfindung betrifft einen quer angeströmten, plattenförmigen Abscheider für Flüssigkeiten aus einem Gasstrom, Insbesondere für Ölnebel, mit einer Mehrzahl von Abscheideprofilen, die jeweils zwei gekrümmte, einander mit der konkaven Seite seitlich versetzt gegenüberliegende Umlenkflächen ausbilden, an denen ein zu reinigender Gasstrom nacheinander entlang strömt, wobei die Umlenkflächen eine Wirbelkammer mit einem Einlassspalt und einem Auslassspalt zwischen sich einschließen und an ihren Längskanten in einem über die Umlenkflächen hervorstehenden, sich längs der Längskanten erstreckenden Vorsprung enden.

Ein derartiger Abscheider ist beispielsweise beschrieben in der DE 41 31 988 C2. Es hat sich herausgestellt, dass mit einem solchen plattenförmigen Abscheider, der aus einzelnen Abscheideprofilen mit entsprechend gekrümmten Umlenkflächen zusammengesetzt ist, eine sehr gute Abscheidung von Flüssigkeitströpfchen und anderen Schwebeteilchen aus einem Gasstrom erzielt werden kann.

Ausgehend von diesem Stand der Technik liegt der Erfindung die Aufgabe zugrunde, die Abscheideeigenschaften eines derartigen Abscheiders weiter zu verbessern.

Diese Aufgabe wird bei einem Abscheider der eingangs beschriebenen Art erfindungsgemäß dadurch gelöst, dass zumindest einer der Vorsprünge eine erste im Wesentlichen ebene, im Wesentlichen quer zu der Umlenkfläche aus dieser austretende Außenfläche und eine zweite, im Wesentlichen ebene, sich unter einem spitzen Winkel daran anschließende Außenfläche aufweist, so dass der mindestens eine Vorsprung eine in den an den Umlenkflächen entlang strömenden Gasstrom ragende spitze Kante bildet.

Es hat sich herausgestellt, dass das Ersetzen eines wulstförmigen Vorsprunges, wie er im Stand der Technik bekannt ist, durch einen Vorsprung mit zwei ebenen, aneinander anschließenden, einen spitzen Winkel mit sich einschließenden Außenflächen zu einer deutlichen Verbesserung der Abscheideeigenschaften führt.

Wenn davon gesprochen wird, dass die erste Außenfläche im Wesentlichen quer zu der Umlenkfläche aus dieser austritt, so soll darunter eine Anordnung verstanden werden, bei der die erste Außenfläche und die Umlenkfläche senkrecht aufeinander stehen, es wird aber darunter auch eine Anordnung verstanden, bei der die erste Außenfläche unter einem Winkel zwischen 60° und 120° aus der an den mindestens einen Vorsprung anschließenden Umlenkfläche austritt. Wesentlich ist, dass am Ende der Umlenkfläche die erste Außenfläche eine in den Gasstrom hinein ragende und mit einer spitzen Kante endende Prallfläche ausbildet und dass sich daran die zweite Außenfläche anschließt, die annähernd parallel zu der an dem mindestens einen Vorsprung anschließenden Umlenkfläche verläuft.

Die Größe des spitzen Winkels zwischen der ersten Außenfläche und der zweiten Außenfläche des mindestens einen Vorsprungs kann zwischen 30° und 60° liegen, vorzugsweise im Bereich von etwa 45°.

Gemäß einer bevorzugten Weiterbildung der Erfindung kann vorgesehen sein, dass der mindestens eine Vorsprung an der der Umlenkfläche gegenüberliegenden Außenseite des Abscheideprofils eine im Wesentlichen ebene, im Wesentlichen quer zu der Umlenkfläche nach außen abstehende dritte Außenfläche aufweist.

Auch diese dritte Außenfläche tritt aus der Außenseite unter einem Winkel zwischen 60° und 120° aus, vorzugsweise in der Größenordnung von 90°.

Es ist vorteilhaft, wenn die Außenseite des Abscheideprofils in ihrem sich an die Längskanten anschließenden Bereich im Wesentlichen parallel zu der Umlenkfläche des Abscheideprofils verläuft, wenn also das Abscheideprofil die Form einer gebogenen Platte aufweist, deren Innenseite die Umlenkfläche bildet.

Besonders günstig ist eine Ausgestaltung, bei der die erste Außenfläche und die dritte Außenfläche in einer Ebene liegen.

Gemäß einer weiteren bevorzugten Ausführungsform ist vorgesehen, dass sich an die zweite Außenfläche des mindestens einen Vorsprungs eine vierte im Wesentlichen ebene Außenfläche anschließt, die im Wesentlichen quer zur zweiten Außenfläche verläuft.

Dabei wird unter dem Ausdruck "quer verlaufend" eine genau senkrechte Anordnung verstanden, es kann aber auch vorgesehen sein, dass die Größe des Winkels zwischen der zweiten Außenfläche und der vierten Außenfläche zwischen 75° und 105° liegt.

Vorteilhaft ist es dabei, wenn die Kante zwischen der zweiten Außenfläche und der vierten Außenfläche im Wesentlichen in einer gedachten Verlängerung der Umlenkfläche über den mindestens einen Vorsprung hinaus angeordnet ist. Damit endet das Abscheideprofil in einer Spitze, der der Vorsprung in Strömungsrichtung vorgelagert ist.

Insbesondere kann vorgesehen sein, dass der mindestens eine Vorsprung einen dreieckigen Querschnitt aufweist, dessen Grundseite durch die erste Außenfläche sowie die dritte Außenfläche und dessen Schenkel durch die zweite Außenfläche sowie durch dessen vierte Außenfläche gebildet werden. Das Abscheideprofil mit dem Vorsprung erhält somit einen pfeilförmigen Querschnitt.

Vorsprünge der beschriebenen Art können an mindestens einer Längskante der Abscheideprofile angeordnet sein, es ist aber besonders vorteilhaft, wenn derartige Vorsprünge an allen Längskanten der Abscheideprofile angeordnet werden, wenn also alle Abscheideprofile an ihrer freien Kante in einem insbesondere pfeilförmigen Vorsprung enden, der sich leistenartig über die gesamte Länge des Abscheideprofiles erstreckt.

Bei einer bevorzugten Ausführungsform ist vorgesehen, dass die Abscheideprofile zwei spiegelbildlich zueinander angeordnete Umlenkflächen tragen, die mit ihren Außenseiten einander zugewandt sind.

Besonders vorteilhaft ist es dabei, wenn Abscheideprofile mit zwei spiegelbildlich zueinander angeordneten Umlenkflächen um jeweils 180° verdreht und seitlich und in Einströmrichtung versetzt zueinander angeordnet sind. Man kann dann das plattenförmige Abscheideelement mit vollständig baugleichen Abscheideprofilen aufbauen, die durch ihre Orientierung und durch ihre Position gemeinsam mit jeweils benachbarten Abscheideprofilen die von den Umlenkflächen umgebenen Wirbelkammern ausbilden.

Die nachfolgende Beschreibung bevorzugter Ausführungsformen der Erfindung dient im Zusammenhang mit der Zeichnung der näheren Erläuterung. Es zeigen:
- Figur 1:: eine perspektivische Ansicht eines mit einer Pumpe versehenen Flüssigkeitsabscheiders mit plattenförmigen, aus einzelnen Abscheideprofilen zusammengesetzten Abscheideelementen;
- Figur 2:: eine Draufsicht auf einen Ausschnitt von nebeneinander angeordneten Abscheideprofilen mit im Querschnitt dreieckförmigen Vorsprüngen an den freien Kanten der von den Abscheideprofilen ausgebildeten Umlenkflächen;
- Figur 3:: eine Ansicht ähnlich Figur 2 mit mehreren nebeneinander angeordneten Abscheideprofilen gemäß Figur 2 und mit einer Darstellung der sich zwischen den Abscheideprofilen einstellenden Strömungspfade;
- Figur 4:: eine Ansicht ähnlich Figur 2 mit zusätzlichen Angaben über Strömungspfade im Bereich der pfeilförmigen Vorsprünge und
- Figur 5:: eine Ansicht ähnlich Figur 2 mit weiteren Darstellungen von beim Durchströmen des Abscheideelementes auftretenden Strömungspfaden.

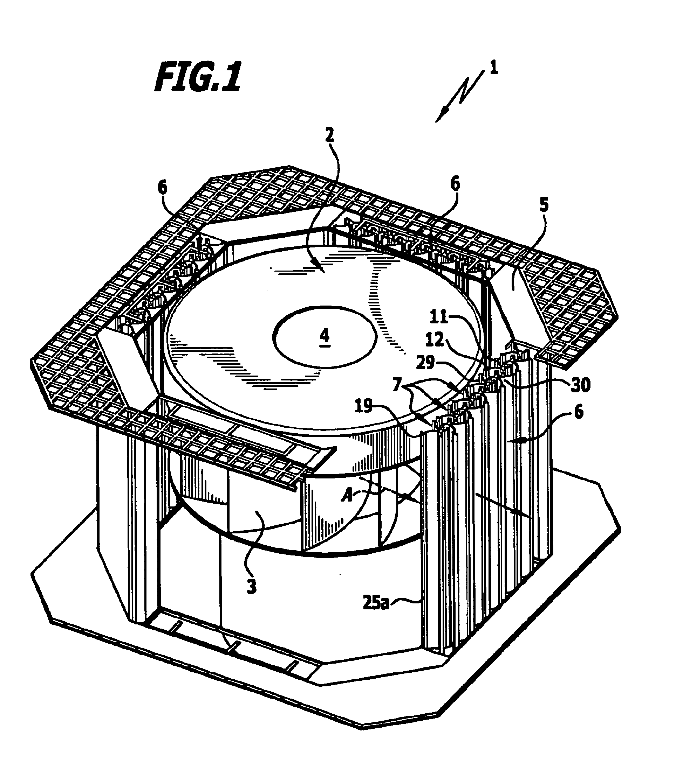

Das in Figur 1 dargestellte Abscheideelement 1 umfasst ein scheibenförmiges, um eine senkrechte Achse durch einen in der Zeichnung nicht dargestellten Antrieb verdrehbares Turbinenrad 2 mit Turbinenschaufeln 3, welches durch die Drehung durch eine zentrale Öffnung 4 angesaugtes Gas umlenkt und radial nach außen fördert. Das Turbinenrad 2 ist in einem Käfig 5 angeordnet, der für das geförderte Gas durchlässige Seitenwände aufweist, diese Seitenwände bilden plattenförmige Abscheider 6, die für den von dem Turbinenrad 2 geförderten Gasstrom einen Strömungspfad bereitstellen, längs dessen der Gasstrom umgelenkt wird und dadurch mitgerissene Flüssigkeitsteilchen und andere Schwebeteilchen verliert, so dass der die Abscheider 6 nach außen hin verlassende Gasstrom gereinigt wird.

Die plattenförmigen, das Turbinenrad 2 im Wesentlichen senkrecht umgebenden Abscheider 6 sind aus einer Vielzahl von nebeneinander angeordneten und parallel zueinander verlaufenden Abscheideprofilen 7 aufgebaut, die im Abstand nebeneinander angeordnet sind und zwischen sich den Strömungsweg für den Gasstrom ausbilden.

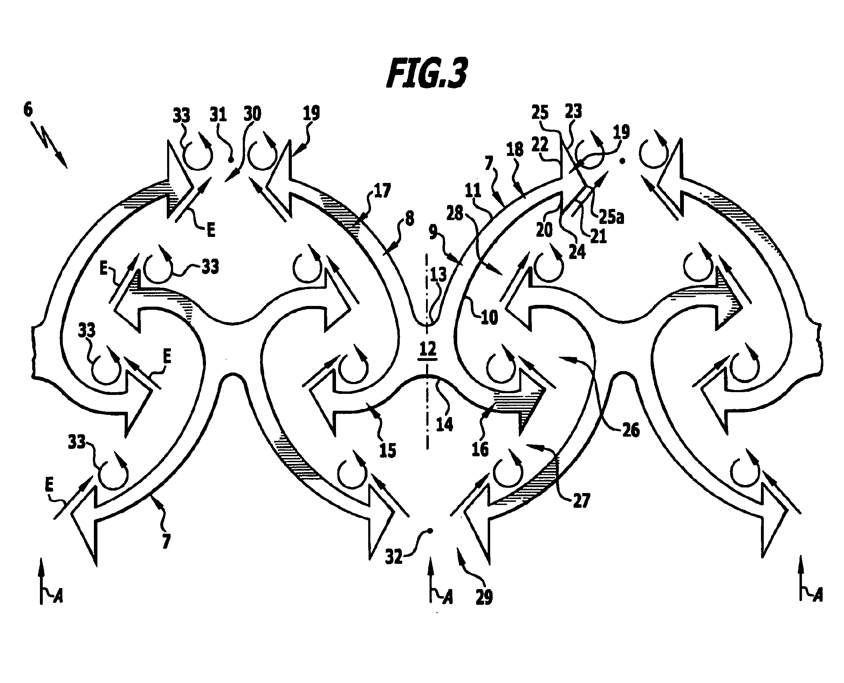

Wie aus der Darstellung der Figur 3 ersichtlich wird, sind bei dem dargestellten Ausführungsbeispiel alle verwendeten Abscheideprofile 7 im Querschnitt gleich ausgebildet, es handelt sich dabei um Strangprofile, die in ihrer Längsrichtung einen gleichbleibenden Querschnitt aufweisen und die mit ihren Längsachsen parallel zueinander in dem Abscheider 6 angeordnet sind.

Jedes Abscheideprofil 7 ist zu einer senkrechten Mittelebene (in Figur 3 strichpunktiert eingezeichnet) spiegelsymmetrisch ausgebildet und weist auf jeder Seite ein schalenförmiges Umlenkteil 8, 9 auf, dessen konkave Innenseite eine Umlenkfläche 10 ausbildet, während die konvexe Außenseite 11 im Wesentlichen parallel zu dieser Umlenkfläche 10 verläuft. Die beiden Umlenkteile 8, 9 sind über eine Brücke 12 so miteinander verbunden, dass die Umlenkflächen 10 voneinander weg weisen. Die Krümmung der Umlenkflächen 10 ändert sich in einer Ebene, die quer zur Längsrichtung der Abscheideprofile 7 verläuft, kontinuierlich, d.h. sie nimmt von einer Kante der Umlenkfläche 10 zur gegenüberliegenden Kante kontinuierlich zu.

Im Bereich der Brücke gehen die Außenseiten 11 der beiden Umlenkteile 8, 9 über eine bogenförmige Kontur 13, 14 ineinander über, insgesamt ergibt sich damit ein annähernd X-förmiger Querschnitt eines Abscheideprofils 7 mit zwei kurzen Armen 15, 16 und zwei langen Armen 17, 18.

Die Umlenkteile 8, 9 tragen längs ihrer freien Kanten jeweils sich über die gesamte Länge der Abscheideprofile 7 erstreckende, über diese Länge einen konstanten Querschnitt aufweisende und im Querschnitt dreieckförmige Vorsprünge 19, die seitlich begrenzt werden durch eine von der Umlenkfläche 10 nach innen vorspringende ebene erste Außenfläche 20, eine mit dieser einen spitzen Winkel einschließende ebene zweite Außenfläche 21, eine in einer Ebene mit der ersten Außenfläche 20 liegende, nach außen von der Außenseite 11 des Umlenkteiles abstehende, ebene dritte Außenfläche 22 und durch eine mit der dritten Außenfläche 22 einen spitzen Winkel und mit der zweiten Außenfläche 21 einen annähernd rechten Winkel einschließende, ebene vierte Außenfläche 23. Die erste Außenfläche 20 und die zweite Außenfläche 21 schließen zwischen sich eine spitze Kante 24 ein, die dritte Außenfläche 22 und die vierte Außenfläche 23 schließen zwischen sich einen spitze Außenkante 25 ein und die zweite Außenfläche 21 und die vierte Außenfläche 23 treffen längs einer scharfen Kante 25a zusammen.

Insgesamt weisen somit das Umlenkteil und der sich am Ende des Umlenkteils anschließende, im Querschnitt dreieckige Vorsprung 19 eine pfeilförmige Querschnittsform auf, wobei die Spitze dieses Pfeiles markiert wird durch die Kante 25a, die sich im Wesentlichen auf einer gedachten Verlängerung der Umlenkfläche 10 befindet.

Derartige Vorsprünge 19 sind an allen Kanten des Abscheideprofils 7 angeordnet, die von den Kanten 25a gebildeten Pfeilspitzen weisen in jedem Falle weg von den jeweiligen Umlenkflächen 10.

Die Länge der ersten Außenfläche 20 und der dritten Außenfläche 22 in einer Richtung quer zur Umlenkfläche 10 beträgt etwa das Ein- bis Dreifache der Dicke der Umlenkteile, also des Abstandes zwischen Umlenkfläche 10 und Außenseite 11, und die Ebene, in der die erste Außenfläche 20 und die dritte Außenfläche 22 liegen, verläuft gegenüber der Umlenkfläche 10 entweder im Wesentlichen senkrecht, wie dies bei den kurzen Armen 15, 16 dargestellt ist, oder mit einem Winkel, der zwischen 60° und 120° beträgt, wie dies bei den langen Armen 17, 18 dargestellt ist.

Gleich aufgebaute Abscheideprofile 7 sind so nebeneinander angeordnet, dass benachbarte Abscheideprofile 7 jeweils um 180° um ihre Längsachse gedreht sind und dass benachbarte Abscheideprofile 7 so quer zur Erstreckung der plattenförmigen Abscheider 6 gegeneinander versetzt sind, dass die Brücken 12 benachbarter Abscheideprofile 7 im Wesentlichen nebeneinander liegen. Dadurch enden jeweils die kurzen Arme 15, 16 benachbarter Abscheideprofile 7 etwa in der Mitte zwischen den beiden äußeren Kanten der Umlenkflächen 10 des benachbarten Abscheideprofils 7, und die jeweils einander gegenüberstehenden kurzen Arme 15, 16 benachbarter Abscheideprofile 7 umgeben eine Wirbelkammer 26 mit einem Einlassspalt 27 und einem Auslassspalt 28. Der Einlassspalt 27 wird dabei gebildet durch die Außenseite eines kurzen Armes 16 eines Abscheideprofiles 7 und durch die Umlenkfläche 10 des langen Armes 18 des benachbarten Abscheideprofils 7, während der Auslassspalt 28 gebildet wird durch die Umlenkfläche 10 des langen Armes 18 und die Außenseite 11 des kurzen Armes 16 der jeweils anderen Abscheideprofile 7.

In Richtung des Einlassspaltes 27 nimmt die Krümmung der Umlenkfläche 10 zu, d.h. die Krümmung ist im Bereich der Wirbelkammer 26 am größten, und umgekehrt nimmt die Krümmung der Umlenkfläche bei dem Auslassspalt 28 von der Wirbelkammer 26 in Strömungsrichtung ab.

Die Enden der langen Arme 17, 18 der Abscheideprofile 7 von übernächsten Abscheideprofilen 7 liegen einander gegenüber, so dass die durch die Vorsprünge 19 gebildeten, im Querschnitt pfeilförmigen Abschlüsse der langen Arme 17, 18 aufeinander zu gerichtet sind und zwischen sich eine Eintrittsöffnung 29 und auf der gegenüberliegende Seite des Abscheiders 6 eine Austrittsöffnung 30 ausbilden.

Durch den symmetrischen Aufbau mit gleichartigen Abscheideprofilen 7, die jeweils um 180° verdreht benachbart gegeneinander angeordnet sind, kann der durch die Abscheideprofile 7 aufgebaute Abscheider 6 von beiden Seiten her angeströmt werden, die Strömungsverhältnisse sind dabei identisch. Bei den in der Zeichnung dargestellten Ausführungsbeispielen wird angenommen, dass die Anströmung in Richtung der von unten nach oben weisenden Pfeile A erfolgt. Das gegen den Abscheider 6 gerichtete Gas strömt dabei zunächst durch die Eintrittsöffnungen 29 hindurch und wird dort aufgeteilt in zwei Teilströme, die durch die beiden nach links und nach rechts führenden Einlassspalte 27 in die beiden Wirbelkammern 26 eintreten. Aus diesen Wirbelkammern 26 fließt das Gas durch die Auslassspalte 28 wieder aus und vereinigt sich zu einem durch die Austrittsöffnung 30 den Abscheider 6 verlassenden Gasstrom.

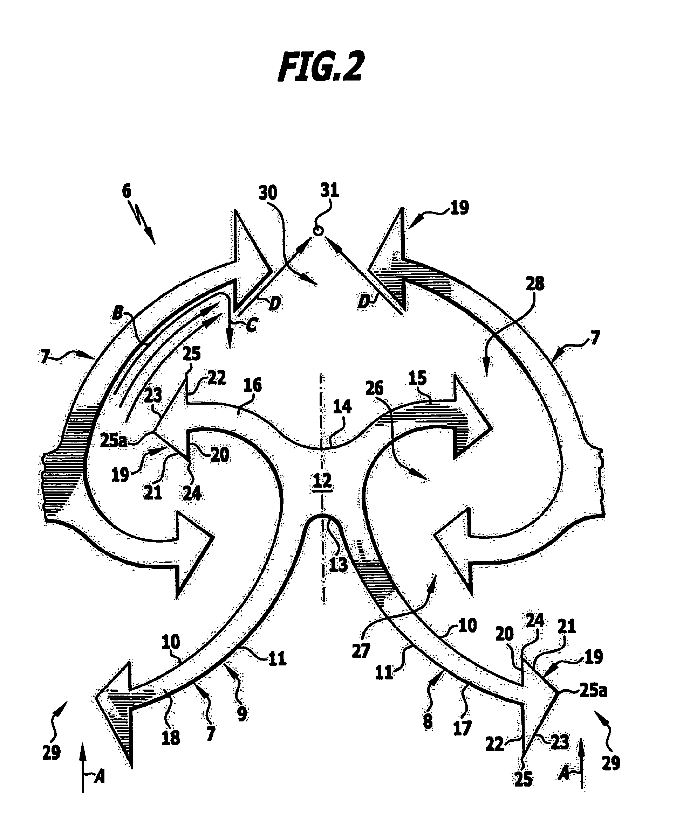

Dabei strömt das Gas beim Verlassen der Wirbelkammern 26 entlang der Umlenkflächen 10, wie dies durch die Strömungspfeile B in Figur 2 dargestellt ist. In diesem Bereich ist die Strömung weitgehend laminar, sie wird jedoch gestört durch die in den Auslassspalt 28 hinein ragende, durch die erste Außenfläche 20 und die zweite Außenfläche 21 des Vorsprunges 19 ausgebildete, scharfkantige Leiste, die dazu führt, dass der unmittelbar an der Umlenkfläche 10 anliegende Teil des Gasstromes scharf nach innen umgelenkt wird, wie dies durch den Pfeil C in Figur 2 angedeutet ist. Diese scharfe Umlenkung der Strömung führt zu einer sogenannten Strömungswand, die im Wesentlichen in Richtung der ersten Außenfläche 20 ausgerichtet ist und die mit dem weiter von der Umlenkfläche 10 nach innen entfernten Teil des Gasstromes kollidiert. Diese Kollision führt sowohl zu einer verstärkten Abscheidung wie auch zu einer verstärkten Agglomeration von kleinen Partikeln.

Eine ähnliche Kollision von Strömungen ergibt sich im Bereich der Austrittsöffnung 30 durch die konvergierenden zweiten Außenflächen 21 der einander gegenüber stehenden Vorsprünge 19, wie dies durch die Strömungspfeile D in Figur 2 angedeutet ist. Die gesamte Luftströmung an der Austrittsöffnung 30 wird durch die konvergierenden beiden Außenflächen 21 auf einen einzigen Kollisionspunkt 31 geleitet, und dies führt zu sehr intensiven Agglomerationseffekten und Abscheidungseffekten.

Ein ähnlicher Kollisionseffekt tritt auch im Bereich der Eintrittsöffnung 29 auf, wie aus der Darstellung der Figur 3 ersichtlich ist. Durch die in Strömungsrichtung konvergierenden vierten Außenflächen 23 der Vorsprünge 19 werden die Gasströmungen konzentriert und auf einen Kollisionspunkt 32 gelenkt, so dass in diesem Bereich ebenfalls eine verstärkte Abscheidung und Agglomeration auftritt.

Es hat sich weiterhin herausgestellt, dass durch die spezielle Formgebung der Vorsprünge 19 sogenannte Minizyklone ausgebildet werden, also kleinflächige Wirbel 33, die sich jeweils an den stromabwärts gelegenen scharfen Kanten der Vorsprünge 19 hinter diesen ausbilden, wenn eine Strömung im Wesentlichen parallel zu der zweiten Außenfläche 21 oder der vierten Außenfläche 23 des Vorsprunges 19 an dieser vorbei führt. In Figur 3 sind an allen Vorsprüngen 19 derartige Wirbel 33 schematisch dargestellt, die diese Wirbel 33 erzeugenden, im Wesentlichen parallel zu den zweiten Außenflächen 21 und vierten Außenflächen 23 verlaufenden Strömungen werden durch Pfeile E bezeichnet. Die Erzeugung dieser Wirbel erfolgt durch eine Ablösung und einen Abriss der an den zweiten Außenflächen und vierten Außenflächen entlang führenden Strömungen, da eine solche Strömung den scharfen Umlenkungen nicht folgen kann, die sich durch die stromabwärts gelegenen Kanten der Vorsprünge ergeben. Dies führt zu einer Zone von großem Unterdruck am stromabwärts gelegenen scharfkantigen Ende der zweiten Außenfläche 21 und der vierten Außenfläche 23 und versetzt die Strömung in eine Zyklonströmung mit kleinen Wirbeln 33, die ihrerseits die Abscheidung und Agglomeration von im Gasstrom mitgerissenen Teilchen fördern.

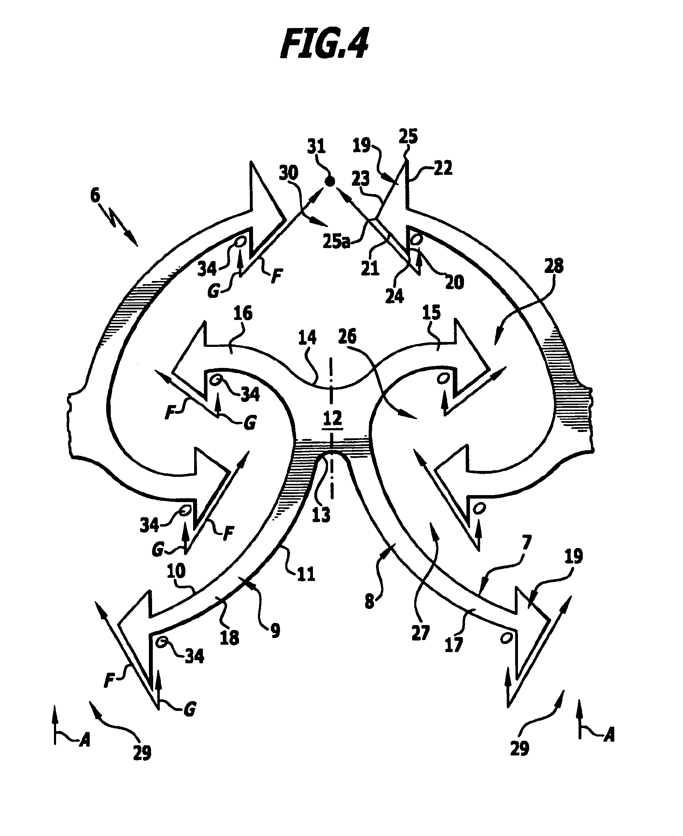

Es hat sich weiterhin herausgestellt, dass die beschriebene Form der Vorsprünge 19 nicht nur die Agglomeration und die Abscheidung von im Gasstrom mitgerissenen Partikeln fördert, sondern dass dadurch auch die Abförderung der abgelagerten Partikel unterstützt wird. Es ist für die Reinigung des Gasstromes nicht nur wesentlich, dass mitgerissene Partikel agglomeriert und abgeschieden werden, es ist auch wichtig, dass diese nicht vom Gasstrom wieder mitgerissen werden, sondern dass diese längs der Abscheideprofile 7 nach unten abfließen können und somit ganz aus dem Gasstrom ausscheiden. Die scharfen Kanten der Vorsprünge 19 verhindern, dass die einmal an der Wand abgelagerten Tröpfchen über die Kanten mitgerissen werden, wie dies bei wulstförmigen Vorsprüngen der Fall sein kann, bei denen die abgeschiedenen Tröpfchen längs der Wulstoberfläche durch den Gasstrom mitgerissen werden. Durch die scharfen Winkel zwischen der Umlenkfläche 10 und den von der Umlenkfläche 10 und auch von der Außenseite 11 abstehenden Außenflächen der Vorsprünge ist sichergestellt, dass dort abgelagerte Tröpfchen verbleiben und unter der Wirkung der Schwerkraft nach unten abfließen. In Figur 4 sind derartige abgeschiedene Tröpfchen 34 dargestellt, die sich in den Winkeln zwischen Umlenkfläche 10 und Außenseite 11 einerseits und den Außenflächen des Vorsprungs 19 anderseits sammeln und dann von den in Figur 4 mit F bezeichneten Strömungen nicht mitgerissen werden. Tatsächlich ergibt sich in diesen Winkelbereichen eine gewisse Stauwirkung, da von der mit F bezeichneten und im Wesentlichen längs der zweiten Außenfläche 21 und der vierten Außenfläche 23 verlaufenden Strömung ein Teil durch die spitze Kante des Vorsprunges abgespalten wird, dieser Teil ist durch Pfeile G in Figur 4 dargestellt. Dieser Teil hält die abgeschiedenen Tröpfchen 34 in den scharfen Winkeln, die aufgrund der länglichen Form der Abscheideprofile 7 als Abflussrinnen wirken. In diesen Abflussrinnen ergibt sich durch den Gasstrom G ein Überdruck, und dieser stellt sicher, dass sich die abgeschiedenen Partikel nur von oben nach unten bewegen können und nicht horizontal in Richtung der Luftströmung F.

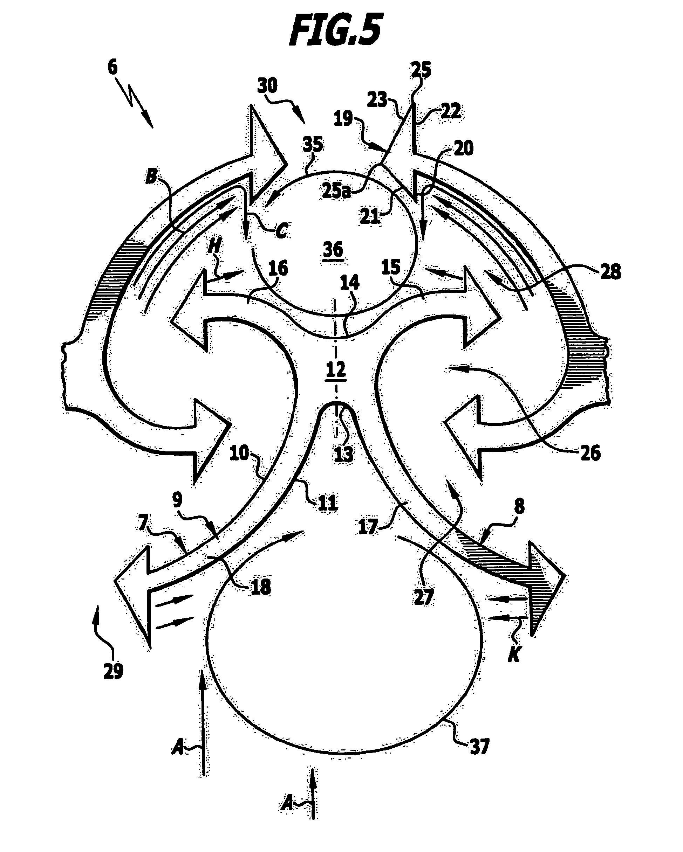

Wie anhand der Figur 2 erläutert, bildet sich im Auslassspalt 28 durch die erste Außenfläche 20 des Vorsprunges 19 eine nach innen gerichtete Strömungswand aus, die in den Figuren 2 und 5 mit dem Buchstaben C bezeichnet ist, und diese Strömungswand wird an der Außenseite 11 der kurzen Arme 15, 16 des benachbarten Abscheideprofils 7 so umgelenkt, dass sich der Austrittsöffnung 30 ein großes Zyklonenfeld 35 vorlagert, dieses rotiert mit hoher Intensität und führt ebenfalls zu einer weiteren Verbesserung der Partikelabscheidung. Die im Querschnitt dreieckförmigen Vorsprünge 19 unterstützen diese Zyklonenausbildung, da sie die der Austrittsöffnung 30 vorgelagerte Kammer 36 begrenzen und somit zu einer Sperrwirkung führen, gegen die dritten Außenflächen 22 der Vorsprünge 19 gerichtete Gasströmungen werden an diesen dritten Außenflächen 22 umgelenkt und zurückgeworfen, so dass die entsprechenden Gasteile ihrerseits die Ausbildung des Zyklonenfeldes 35 unterstützen, dies wird deutlich durch die mit dem Buchstaben H gekennzeichneten Strömungspfeile in Figur 5.

Ein ähnlicher Effekt ergibt sich durch den anströmenden Gasstrom im Bereich zwischen zwei Eintrittsöffnungen 29. In diesem Bereich bildet sich zwischen den nach außen gekrümmten langen Armen 17, 18 aus ähnlichen Gründen ein großes Zyklonenfeld 37 aus, welches ebenfalls durch Gasstromanteile (Pfeil K) unterstützt wird, die durch von dritten Außenflächen 22 umgelenkte Gasstromteile entstehen.

Die genannten Einwirkungen auf die Strömungsverhältnisse ergeben sich durch die spezielle Formgebung der an den Kanten angeordneten und längs der Kanten verlaufenden Vorsprünge 19, so dass durch diese Formgebung eine ganz erhebliche Verbesserung der Abscheidequalität des Abscheiders 6 insgesamt erreicht werden kann.

## Patentansprüche

1. Quer angeströmter, plattenförmiger Abscheider (6) für Flüssigkeiten aus einem Gasstrom, insbesondere für Ölnebel, mit einer Mehrzahl von quer zur Strömungsrichtung des Gasstromes parallel nebeneinander angeordneten Abscheideprofilen (7), die jeweils zwei gekrümmte, einander mit der konkaven Seite seitlich versetzt gegenüberliegende Umlenkflächen (10) ausbilden, an denen ein zu reinigender Gasstrom nacheinander entlang strömt, wobei die Umlenkflächen (10) eine Wirbelkammer (26) mit einem Einlassspalt (27) und einem Auslassspalt (28) zwischen sich einschließen und an ihren Längskanten In einem über die Umlenkflächen (10) hervorstehenden, sich längs der Längskanten erstreckenden Vorsprung (19) enden, **dadurch gekennzeichnet, dass** zumindest einer der Vorsprünge (19) eine erste, im Wesentlichen ebene, im Wesentlichen quer zu der Umlenkfläche (10) aus dieser austretende Außenfläche (20) und eine zweite, im Wesentlichen ebene, sich unter einem spitzen Winkel daran anschließende Außenfläche (21) aufweist, so dass der mindestens eine Vorsprung (19) eine in den an den Umlenkflächen (10) entlang strömenden Gasstrom ragende spitze Kante (24) bildet.

2. Abscheider nach Anspruch 1, **dadurch gekennzeichnet, dass** die erste Außenfläche (20) unter einem Winkel zwischen 60° und 120° aus der an den mindestens einen Vorsprung (19) anschließenden Umlenkfläche (10) austritt.

3. Abscheider nach einem der Ansprüche 1 oder 2, **dadurch gekennzeichnet, dass** die Größe des spitzen Winkels zwischen der ersten Außenfläche (20) und der zweiten Außenfläche (21) des mindestens einen Vorsprungs (19) zwischen 30° und 60° liegt.

4. Abscheider nach einem der voranstehenden Ansprüche, **dadurch gekennzeichnet, dass** der mindestens eine Vorsprung (19) an der der Umlenkfläche (10) gegenüberliegenden Außenseite (11) des Abscheideprofils (7) eine im Wesentlichen ebene, im Wesentlichen quer zu der Umlenkfläche (10) nach außen abstehende dritte Außenfläche (22) aufweist.

5. Abscheider nach Anspruch 4, **dadurch gekennzeichnet, dass** die dritte Außenfläche (22) unter einem Winkel zwischen 60° und 120° aus der Außenseite (11) des Abscheideprofils (7) austritt.

6. Abscheider nach Anspruch 5, **dadurch gekennzeichnet, dass** die Außenseite (11) des Abscheideprofils (7) in ihrem sich an die Längskanten anschließenden Bereich im Wesentlichen parallel zu der Umlenkfläche (10) des Abscheideprofils (7) verläuft.

7. Abscheider nach einem der Ansprüche 4 bis 6, **dadurch gekennzeichnet, dass** die erste Außenfläche (20) und die dritte Außenfläche (22) in einer Ebene liegen.

8. Abscheider nach einem der voranstehenden Ansprüche, **dadurch gekennzeichnet, dass** sich an die zweite Außenfläche (21) des mindestens einen Vorsprungs (19) eine vierte, im Wesentlichen ebene Außenfläche (23) anschließt, die im Wesentlichen quer zur zweiten Außenfläche (21) verläuft.

9. Abscheider nach Anspruch 8, **dadurch gekennzeichnet, dass** die Größe des Winkels zwischen der zweiten Außenfläche (21) und der vierten Außenfläche (23) zwischen 75° und 105° liegt.

10. Abscheider nach einem der Ansprüche 8 oder 9, **dadurch gekennzeichnet, dass** die Kante (25a) zwischen der zweiten Außenfläche (21) und der vierten Außenfläche (23) im Wesentlichen in einer gedachten Verlängerung der Umlenkfläche (10) über den mindestens einen Vorsprung (19) hinaus angeordnet ist.

11. Abscheider nach einem der Ansprüche 8 bis 10, **dadurch gekennzeichnet, dass** der mindestens eine Vorsprung (19) einen dreieckigen Querschnitt aufweist, dessen Grundseite durch die erste Außenfläche (20) sowie die dritte Außenfläche (22) und dessen Schenkel durch die zweite Außenfläche (21) sowie durch dessen vierte Außenfläche (23) gebildet werden.

12. Abscheider nach einem der voranstehenden Ansprüche, **dadurch gekennzeichnet, dass** an allen Längskanten der Umlenkflächen (10) ein Vorsprung (19) mit den Merkmalen eines der Ansprüche 1 bis 11 angeordnet ist.

13. Abscheider nach einem der voranstehenden Ansprüche, **dadurch gekennzeichnet, dass** die Abscheideprofile (7) zwei spiegelbildlich zueinander angeordnete Umlenkflächen (10) tragen, die mit ihren Außenseiten (11) einander zugewandt sind.

14. Abscheider nach Anspruch 13, **dadurch gekennzeichnet, dass** Abscheideproflle (7) mit zwei spiegelbildlich zueinander angeordneten Umlenkflächen (10) jeweils um 180° verdreht und seitlich und in Einströmrichtung versetzt zueinander angeordnet sind.

## Claims

1. Plate-like separator (6) for separating liquids from a gas stream, in particular oil mist, wherein the stream approaches the separator transversely, comprising a plurality of separating profiles (7) juxtaposed parallel to one another and transversely of the flow direction of the gas stream and each forming two curved deflection surfaces (10), which lie opposite one another with the concave side laterally offset and along which in succession a gas stream to be cleaned flows, wherein the deflection surfaces (10) between them include a swirl chamber (26) having an inlet gap (27) and an outlet gap (28) and terminate at their longitudinal edges in a projection (19) that projects from the deflection surfaces (10) and extends along the longitudinal edges, **characterized in that** at least one of the projections (19) has a first, substantially planar outer surface (20) emanating from the deflection surface (10) substantially transversely thereof and a second, substantially planar outer surface (21) adjoining the first outer surface at an acute angle so that the at least one projection (19) forms a sharp edge (24) that projects into the gas stream flowing along the deflection surfaces (10).

2. Separator according to claim 1, **characterized in that** the first outer surface (20) emanates at an angle of between 60° and 120° from the deflection surface (10) adjoining the at least one projection (19).

3. Separator according to one of claims 1 or 2, **characterized in that** the size of the acute angle between the first outer surface (20) and the second outer surface (21) of the at least one projection (19) is between 30° and 60°.

4. Separator according to one of the preceding claims, **characterized in that** the at least one projection (19) has at the outer side (11) of the separating profile (7) opposite to the deflection surface (10) a substantially planar third outer surface (22) that projects outwards substantially transversely of the deflection surface (10).

5. Separator according to claim 4, **characterized in that** the third outer surface (22) emanates at an angle of between 60° and 120° from the outer side (11) of the separating profile (7).

6. Separator according to claim 5, **characterized in that** the outer side (11) of the separating profile (7) in its region adjoining the longitudinal edges extends substantially parallel to the deflection surface (10) of the separating profile (7).

7. Separator according to one of claims 4 to 6, **characterized in that** the first outer surface (20) and the third outer surface (22) lie in one plane.

8. Separator according to one of the preceding claims, **characterized in that** there adjoins the second outer surface (21) of the at least one projection (19) a fourth, substantially planar outer surface (23) that extends substantially transversely of the second outer surface (21).

9. Separator according to claim 8, **characterized in that** the size of the angle between the second outer surface (21) and the fourth outer surface (23) is between 75° and 105°.

10. Separator according to one of claims 8 or 9, **characterized in that** the edge (25a) between the second outer surface (21) and the fourth outer surface (23) is disposed substantially in an imaginary extension of the deflection surface (10) beyond the at least one projection (19).

11. Separator according to one of claims 8 to 10, **characterized in that** the at least one projection (19) has a triangular cross section, the base of which is formed by the first outer surface (20) and the third outer surface (22) and the lateral sides of which are formed by the second outer surface (21) and the fourth outer surface (23).

12. Separator according to one of the preceding claims, **characterized in that** on all of the longitudinal edges of the deflection surfaces (10) a projection (19) having the features of one of claims 1 to 11 is disposed.

13. Separator according to one of the preceding claims, **characterized in that** the separating profiles (7) carry two deflection surfaces (10), which are arranged in a mirror-inverted manner relative to one another and with their outer sides (11) facing one another.

14. Separator according to claim 13, **characterized in that** separating profiles (7) comprising two deflection surfaces (10) arranged in a mirror-inverted manner relative to one another are disposed in each case rotated through 180° and offset laterally and in inflow direction relative to one another.

## Revendications

1. Séparateur (6) en forme de plaque traversé transversalement servant à extraire des liquides d'un flux de gaz, destiné en particulier à un embrun d'huile, comportant une pluralité de profilés de séparation (7) disposés parallèlement les uns à côté des autres de manière transversale par rapport au sens d'écoulement du flux de gaz, lesquels forment respectivement deux surfaces de déviation (10) courbes, se faisant face l'une l'autre avec le côté concave latéralement décalé, lesquelles sont longées l'une après l'autre par un flux de gaz à nettoyer, les surfaces de déviation (10) renfermant entre elles une chambre de turbulence (26) dotée d'une fente d'admission (27) et d'une fente d'évacuation (28) et aboutissant au niveau de leurs arêtes longitudinales en une saillie (19) dépassant les surfaces de déviation (10) et s'étendant le long des arêtes longitudinales, **caractérisé en ce qu'**au moins une des saillies (19) présente une première surface extérieure (20) essentiellement plane et sortant de la surface de déviation (10) de manière essentiellement transversale par rapport à cette dernière, ainsi qu'une deuxième surface extérieure (21) essentiellement plane et s'y raccordant en formant un angle aigu, de sorte que la au moins une saillie (19) forme une arête (24) pointue dépassant dans le flux de gaz s'écoulant le long des surfaces de déviation (10).

2. Séparateur selon la revendication 1, **caractérisé en ce que** la première surface extérieure (20) sort de la surface de déviation (10) se raccordant à la au moins une saillie (19) en formant un angle compris entre 60° et 120°.

3. Séparateur selon l'une quelconque des revendications 1 ou 2, **caractérisé en ce que** la mesure de l'angle aigu formé par la première surface extérieure (20) et la deuxième surface extérieure (21) de la au moins une saillie (19) est comprise entre 30° et 60°.

4. Séparateur selon l'une quelconque des revendications précédentes, **caractérisé en ce que** la au moins une saillie (19) présente au niveau du côté extérieur (11) du profilé de séparation (7), opposé à la surface de déviation (10), une troisième surface extérieure (22) essentiellement plane, faisant saillie vers l'extérieur essentiellement de manière transversale par rapport à la surface de déviation (10).

5. Séparateur selon la revendication 4, **caractérisé en ce que** la troisième surface extérieure (22) sort du côté extérieur (11) du profilé de séparation (7) en formant un angle compris entre 60° et 120°.

6. Séparateur selon la revendication 5, **caractérisé en ce que** le côté extérieur (11) du profilé de séparation (7) s'étend dans sa zone se raccordant aux arêtes longitudinales essentiellement de manière parallèle par rapport à la surface de déviation (10) du profilé de séparation (7).

7. Séparateur selon l'une quelconque des revendications 4 à 6, **caractérisé en ce que** la première surface extérieure (20) et la troisième surface extérieure (22) se trouvent dans un plan.

8. Séparateur selon l'une quelconque des revendications précédentes, **caractérisé en ce qu'**une quatrième surface extérieure (23) essentiellement plane se raccorde à la deuxième surface extérieure (21) de la au moins une saillie (19), laquelle quatrième surface extérieure s'étend essentiellement de manière transversale par rapport à la deuxième surface extérieure (21).

9. Séparateur selon la revendication 8, **caractérisé en ce que** la mesure de l'angle formé par la deuxième surface extérieure (21) et la quatrième surface extérieure (23) est comprise entre 75° et 105°.

10. Séparateur selon l'une quelconque des revendications 8 ou 9, **caractérisé en ce que** l'arête (25a) est disposée entre la deuxième surface extérieure (21) et la quatrième surface extérieure (23) essentiellement dans un prolongement pensé de la surface de déviation (10) au-delà de la saillie (19) au moins au nombre de une.

11. Séparateur selon l'une quelconque des revendications 8 à 10, **caractérisé en ce que** la au moins une saillie (19) présente une section transversale triangulaire, dont le côté de base est formé par la première surface extérieure (20) ainsi que par la troisième surface extérieure (22) et dont les autres côtés sont formés par la deuxième surface extérieure (21) ainsi que par la quatrième surface extérieure (23).

12. Séparateur selon l'une quelconque des revendications précédentes, **caractérisé en ce qu'**une saillie (19) présentant les caractéristiques de l'une quelconque des revendications 1 à 11 est disposée au niveau de toutes les arêtes longitudinales des surfaces de déviation (10).

13. Séparateur selon l'une quelconque des revendications précédentes, **caractérisé en ce que** les profilés de séparation (7) portent deux surfaces de déviation (10) disposées l'une par rapport à l'autre de manière symétrique en miroir, dont les côtés extérieurs (11) sont tournés l'un vers l'autre.

14. Séparateur selon la revendication 13, **caractérisé en ce que** les profilés de séparation (7) dotés de deux surfaces de déviation (10) disposées l'une par rapport à l'autre de manière symétrique en miroir sont tournés respectivement de 180° et sont disposés latéralement et dans le sens d'entrée du flux de manière décalée l'un par rapport à l'autre.
